# EUROPEAN PATENT APPLICATION

(11) **EP 4 339 110 A2**
(43) Date of publication of application: **20.03.2024**
(21) Application number: 23186164.2
(22) Date of filing: 18.07.2023
(51) Int. Cl.: B65B 1/08, A61J 7/02, B65B 5/10, B65B 35/04, B65B 35/06, B65B 35/14, B65B 37/04, B65B 39/00, B65B 57/14, B65B 57/20, B65B 59/00, B65G 27/08, B65G 27/16, B65G 27/32, B65G 47/14, B65G 47/71, G07F 17/00

(54) **AUTOMATIC TABLET FEEDING APPARATUS**

(30) Priority: 20.07.2022 KR 20220089266
(71) Applicant: Cretem Co., Ltd., Anyang-si, Gyeonggi-do (KR)
(72) Inventor: Kim, Ho Yeon, Anyang-si (KR)
(74) Representative: BCKIP Part mbB

(57) **Abstract**

Disclosed is an automatic tablet feeding apparatus. The automatic tablet feeding apparatus includes a guide duct having a receiving space defined therein to receive tablets introduced thereinto and guide the tablets downward, a slider formed to be inclined downward toward the receiving space, a first vibrator accommodated in an outer side portion of the slider and configured to output vibration energy in response to an external control signal, a vibrator controller configured to control the frequency of the first vibrator, and an elastic support plate received in an outer side surface of the slider. The vibrator controller includes a smoothing circuit unit smoothing a DC voltage, a main controller generating a PWM control signal, and a voltage variable switching unit varying the DC voltage smoothed by the smoothing circuit unit in response to the PWM control signal from the main controller and applying the DC voltage to the first vibrator.

## Description

### BACKGROUND OF THE INVENTION

### Field of the Invention

The present invention relates to an automatic tablet feeding apparatus, and more particularly, to an automatic tablet feeding apparatus having an improved structure capable of appropriately controlling a vibrator in order to stably supply tablets.

### Description of the Related Art

When a large amount and many kinds of drugs are prepared in, for example, large pharmacies or hospital pharmacies, it is very difficult and inconvenient to manually sort and package all the drugs. In order to solve this inconvenience, automatic drug packaging apparatuses have recently been developed and used.

There are various types of drug packaging apparatuses. In general, a drug packaging apparatus includes cartridges configured to accommodate tablets, a discharge unit configured to discharge tablets from each of the cartridges, and a packaging unit configured to package the discharged tablets.

In addition, a vibrator for applying vibration to a cartridge is used as a mechanism for taking drugs out of the cartridge. That is, when vibration is applied to the cartridge, drugs stored in the cartridge move little by little and are discharged from the cartridge through a discharge port.

However, such a conventional drug packaging apparatus is not equipped with a mechanism for controlling a vibrator, and thus vibration applied to a cartridge by the vibrator is unstable.

Further, because it is not possible to control the magnitude or period of vibration according to the size, shape, or weight of a tablet or a tablet supply time, the conventional drug packaging apparatus is not capable of stably supplying tablets.

### [Related Art Documents]

### [Patent Documents]

(Patent Document 0001) Korean Patent Registration No. 10-1591989 (entitled "APPARATUS FOR DISPENSING SMALL-PARTICLE DRUGS IN FIXED AMOUNT AND SYSTEM FOR PACKAGING SMALL-PARTICLE DRUGS")
(Patent Document 0002) Korean Patent Registration No. 10-1785060 (entitled "APPARATUS FOR SUPPLYING SPECIAL-TYPE TABLETS")

### SUMMARY OF THE INVENTION

The present invention has been made to solve the above problems, and it is an object of the present invention to provide an automatic tablet feeding apparatus capable of appropriately controlling the magnitude and period of vibration of a vibrator, thereby stably supplying tablets having various shapes or sizes.

In accordance with the present invention, the above and other objects can be accomplished by the provision of an automatic tablet feeding apparatus including a guide duct having a receiving space defined therein to receive tablets introduced thereinto and to guide the tablets downward, a slider formed to be inclined downward toward the receiving space and to provide a tablet conveyance passage, a first vibrator accommodated in one of a plurality of side pockets provided on an outer side portion of the slider and configured to output vibration energy in response to an external control signal and to be adjustable in output frequency, a vibrator controller configured to control the output frequency of the first vibrator, and an elastic support plate received in an outer side surface of the slider. The vibrator controller includes a smoothing circuit unit configured to smooth a DC voltage, a main controller configured to generate a PWM control signal, and a voltage variable switching unit configured to vary the DC voltage smoothed by the smoothing circuit unit in response to the PWM control signal from the main controller and to apply the DC voltage to the first vibrator.

The automatic tablet feeding apparatus may further include a second vibrator accommodated in the remaining one of the plurality of side pockets and configured to be fixed in output frequency.

When the tablets are detected by an exit sensor, the output frequency of the first vibrator may be reduced in order to reduce the conveyance speed of the tablets.

The elastic support plate may include a base portion fixed to an upper portion of the guide duct and an extension portion bent and extending upward from the base portion and coupled to the slider so as to be vibrated simultaneously with the slider. The extension portion and the base portion may be formed to be perpendicular to each other through one bending process. The base portion may include long holes formed in both end portions thereof to allow fixing screws to pass therethrough, and the elastic support plate may be fixed to the upper portion of the guide duct using the fixing screws.

The elastic support plate may be made of sheet spring steel or stainless steel so as to have a predetermined thickness.

The elastic support plate may be removably received in an insertion recess formed in the outer side surface of the slider.

### BRIEF DESCRIPTION OF THE DRAWINGS

The above and other objects, features, and other advantages of the present invention will be more clearly understood from the following detailed description taken in conjunction with the accompanying drawings, in which:
FIG. 1 is a perspective view of an automatic tablet feeding apparatus according to an embodiment of the present invention;
FIGs. 2 and 3 are views showing the configuration of the automatic tablet feeding apparatus shown in FIG. 1, with a cover removed therefrom;
FIG. 4 is a perspective cut-away view showing an elevation module and a feeding module in the automatic tablet feeding apparatus according to an embodiment of the present invention;
FIGs. 5 to 9 are views for explaining the configuration and operation of the elevation module shown in FIG. 4;
FIGs. 10 to 16 are views for explaining the configuration and operation of the feeding module in the automatic tablet feeding apparatus according to an embodiment of the present invention;
FIG. 17 is a block diagram showing the configuration of a vibrator controller applied to the present invention;
FIG. 18 is a waveform diagram showing an example of a PWM control signal applied to the present invention;
FIG. 19 is a block diagram showing the overall configuration of the automatic tablet feeding apparatus according to an embodiment of the present invention; and
FIG. 20 is a flowchart showing operation of the automatic tablet feeding apparatus according to an embodiment of the present invention.

### DETAILED DESCRIPTION OF THE INVENTION

Hereinafter, exemplary embodiments of the present invention will be described in detail with reference to the accompanying drawings.

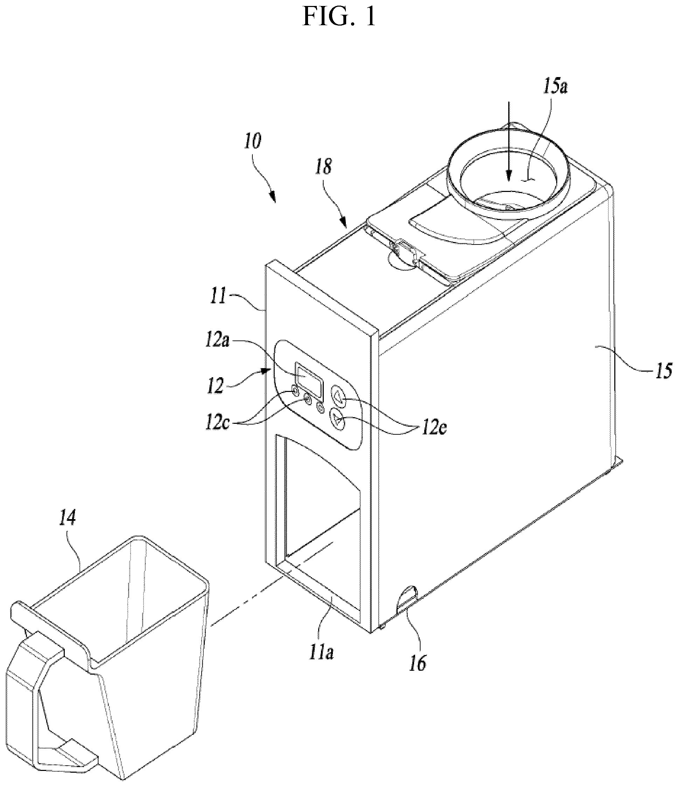

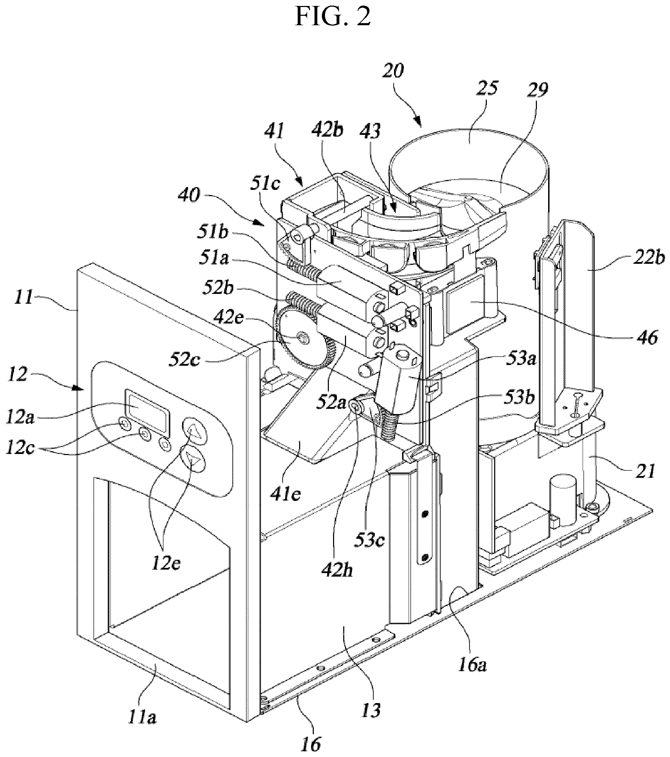

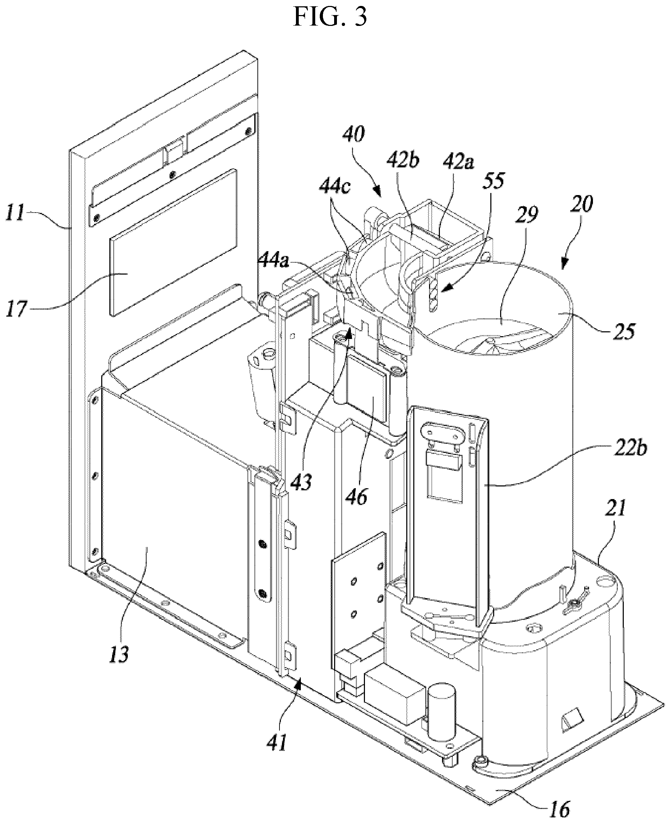

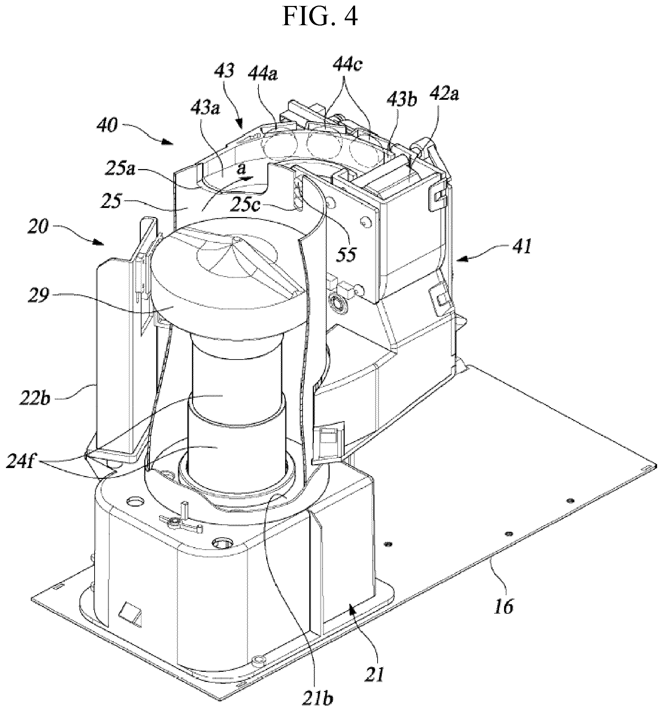

FIG. 1 is a perspective view showing the external appearance of an automatic tablet feeding apparatus 10 according to an embodiment of the present invention, and FIGs. 2 and 3 are views showing the configuration of the automatic tablet feeding apparatus shown in FIG. 1, with a cover removed therefrom. FIG. 4 is a perspective cut-away view showing an elevation module and a feeding module in the automatic tablet feeding apparatus.

The automatic tablet feeding apparatus 10 according to the embodiment is an apparatus that automatically takes out tablets stored therein and feeds the tablets to a person or a place that needs the tablets. Here, the person who needs the tablets may be a user who prepares drugs, that is, a pharmacist. In addition, the term "tablets" in this specification includes not only all sizes or shapes of pills but also capsules.

As shown in the drawings, the automatic tablet feeding apparatus 10 according to the embodiment includes a housing 18 having an inner space defined therein, an elevation module 20 mounted in the housing 18, a feeding module 40, a cup-receiving holder 13, and a collection cup 14.

The housing 18 includes a bottom plate 16, a front panel 11, and a cover 15. The bottom plate 16 is a horizontal metal plate providing support force, and has a rectangular pass hole 16a formed therein. The pass hole 16a is a through-hole located directly under a dispensing passage 41d to be described later. The pass hole 16a is a passage through which drugs to be dispensed, i.e. tablets to be delivered to a pharmacist, pass. The tablets that have passed through the pass hole 16a are delivered to a pharmacist via a connection passage (not shown).

The front panel 11 is provided with an interface unit 12 configured to be manipulated by a user. The interface unit 12 includes a display unit 12a, a light-emitting diode (LED) lamp 12c, and a button 12e. The display unit 12a serves to display the operational status of the automatic tablet feeding apparatus 10, and the button 12e is a switch configured to be operated by a user. The LED lamp 12c indicates the current position of the tablets during operation. In addition, a controller 17 is mounted on the rear surface of the interface unit 12. The controller 17 outputs all control signals for operation of the automatic tablet feeding apparatus 10.

A collection cup passage 11a is provided below the interface unit 12. The collection cup passage 11a is a hole through which the collection cup 14 passes.

The cup-receiving holder 13 is a box-shaped member configured to receive the collection cup 14. The cup-receiving holder 13 is open forward through the collection cup passage 11a. When the collection cup 14 is inserted into the cup-receiving holder 13, the collection cup 14 is located below a collection passage 41e.

"Collection" in this specification means discharge of unused remaining tablets to the outside. For example, discharging tablets remaining after use among the tablets poured into a cylinder 25 of the elevation module 20 to the outside, i.e. to the collection cup 14, is called collection. The reason for collection is to empty the cylinder 25. In addition, the reason for emptying the cylinder 25 is to dispense other kinds of tablets.

Here, "dispensing" is a term opposite to "collection". Dispensing means delivery of tablets to a pharmacist. For example, a passage for dispensing is a passage through which tablets to be delivered to a pharmacist pass. Similarly, a passage for collection is a passage that extends toward the collection cup 14.

The cover 15 is a member that covers and protects the elevation module 20, the feeding module 40, and the cup-receiving holder 13. The cover 15 includes a tablet introduction port 15a formed in the upper side thereof. The tablet introduction port 15a is a passage through which the cylinder 25 is open upward. Tablets are poured through the tablet introduction port 15a to be loaded in the cylinder 25.

The elevation module 20 serves to elevate the tablets loaded in the cylinder 25 to a height of a discharge hole 25a to be described later so that the tablets escape from the cylinder 25 through the discharge hole 25a in the direction of the arrow a.

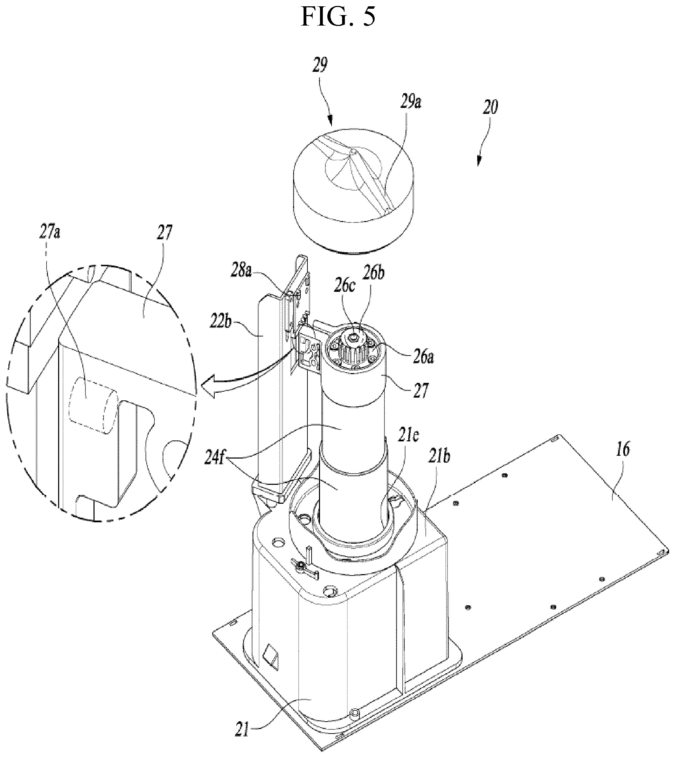

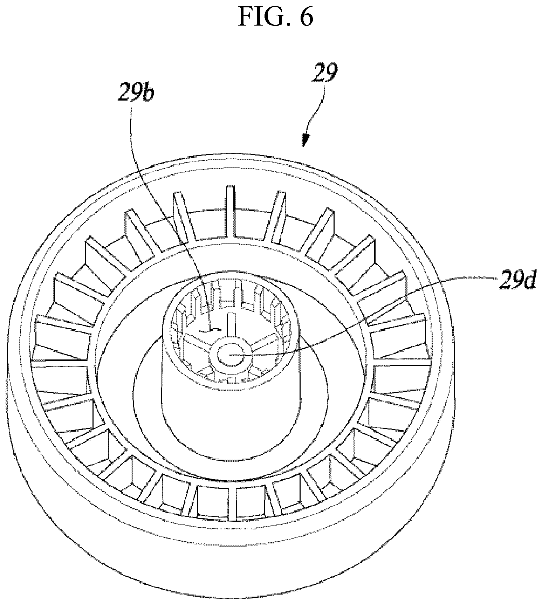

FIGs. 5 to 9 are views for explaining the detailed configuration and operation of the elevation module 20 shown in FIG. 4.

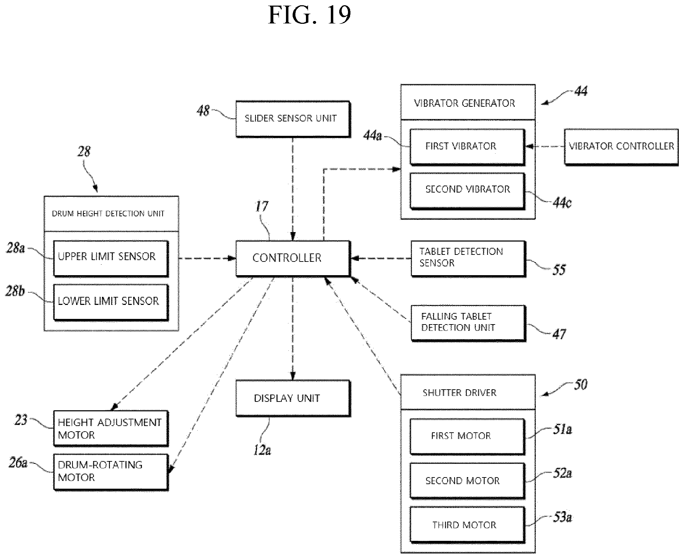

As shown in the drawings, the elevation module 20 includes a support case 21, a horizontal fixing plate 22a, a height adjustment motor 23, a lead screw 23a, guide rods 23c, a lifting body 24, a support band 27, upper and lower limit sensors 28a and 28b, a drum 29, a side separation pillar 22b, and the cylinder 25 (refer to FIG. 4). The upper and lower limit sensors 28a and 28b constitute a drum height detection unit 28 (refer to FIG. 19).

The support case 21 is a support member, the lower end portion of which is fixed to the bottom plate 16. The support case 21 includes a planar support portion 21b formed on the upper side thereof. The planar support portion 21b is a support surface supporting the cylinder 25. The cylinder 25 stands upright in a state in which the lower end portion thereof is supported by the planar support portion 21b. In addition, a center hole 21e is formed in the center of the planar support portion 21b. The center hole 21e is a through-hole, through which the lead screw 23a and the guide rods 23c pass.

The horizontal fixing plate 22a, the lower limit sensor 28b, and the height adjustment motor 23 are fixedly mounted in the support case 21. The horizontal fixing plate 22a is a plate-like member having a predetermined thickness, and is bolted to the lower surface of the planar support portion 21b to provide support force.

The height adjustment motor 23 is fixed to the lower surface of the horizontal fixing plate 22a, and operates in response to a control signal transmitted from the outside to axially rotate the lead screw 23a. The lead screw 23a extends vertically and is connected to a driving shaft of the height adjustment motor 23 to be axially rotated in the clockwise and counterclockwise directions by the height adjustment motor 23.

The lower limit sensor 28b is a magnetic sensor configured to detect magnetic force, and is located directly below a lower magnet 24e. When the lifting body 24 reaches bottom dead center, the lower limit sensor 28b senses the lower magnet 24e, and outputs a signal indicating that the lifting body 24 has reached bottom dead center.

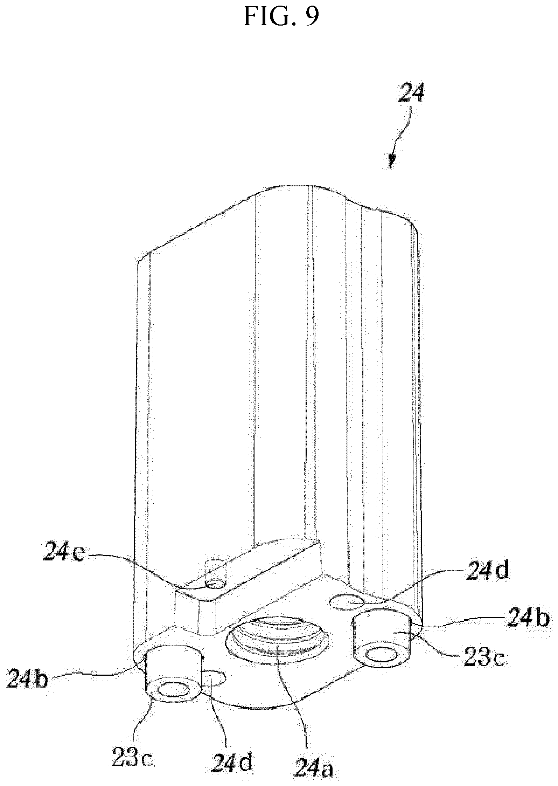

The guide rods 23c are round bar-shaped members disposed on both sides of the lead screw 23a so as to be parallel to the lead screw 23a. The guide rods 23c are inserted into vertical passages 24b (refer to FIG. 9) in the lifting body 24 to guide upward/downward movement of the lifting body 24.

The lifting body 24 is a block-shaped member made of synthetic resin. As shown in FIG. 9, the lifting body 24 includes a female-screw hole 24a and two vertical passages 24b. The female-screw hole 24a is a passage that is formed in the center of the lifting body 24 and has an internal thread formed on the inner circumferential surface thereof. The lead screw 23a is engaged with the female-screw hole 24a. In addition, the vertical passages 24b are passages into which the guide rods 23c are inserted. The guide rods 23c guide vertical upward/downward movement of the lifting body 24.

In addition, a shock-absorbing stopper 24c is mounted beside each of the vertical passages 24b. The shock-absorbing stopper 24c is an elastic member made of urethane or silicon, and protrudes downward from the lifting body 24. When the lifting body 24 moves downwards, the shock-absorbing stopper 24c comes into contact with the upper surface of the horizontal fixing plate 22a and absorbs shock. That is, the shock-absorbing stopper 24c prevents the downward force of the lifting body 24 from being transferred to the horizontal fixing plate 22a. The height of bottom dead center of the lifting body 24 is defined by the shock-absorbing stopper 24c.

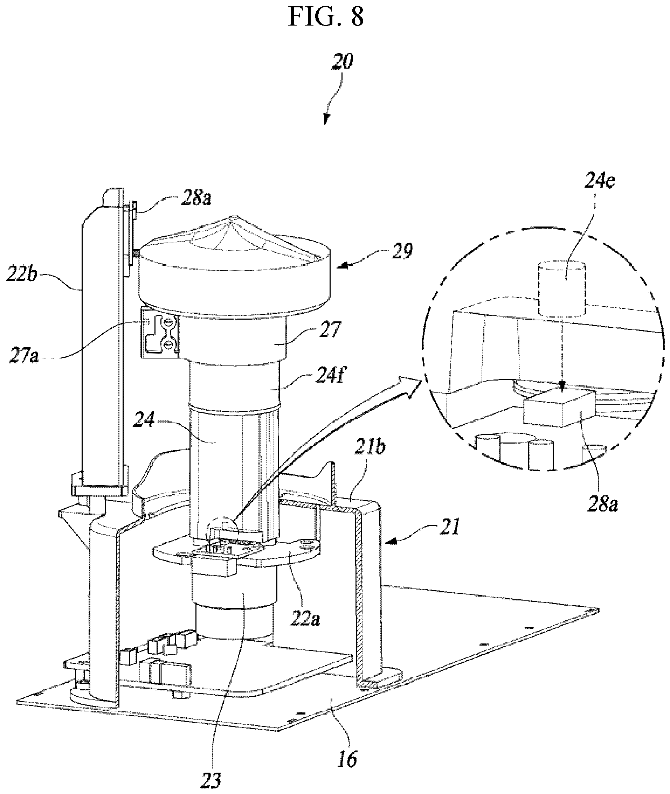

Reference numeral 24e in FIG. 9 denotes a lower magnet. The magnetic force of the lower magnet 24e is transmitted to the lower limit sensor 28b when the lifting body 24 reaches bottom dead center. The height adjustment motor 23 receives a signal from the lower limit sensor 28b to stop descending of the lifting body 24. FIG. 8 is a view showing a state in which the lifting body 24 is located at bottom dead center.

In addition, a drum-rotating motor 26a is mounted on the lifting body 24. The drum-rotating motor 26a is provided to rotate the drum 29. The drum-rotating motor 26a includes a driving shaft and a driving gear 26b coupled to the driving shaft. The drum-rotating motor 26a is moved upward and downward together with the lifting body 24.

The driving gear 26b is inserted into a gear-receiving recess 29b formed in the lower surface of the drum 29, and is provided at the center of the upper surface thereof with a magnet 26c. The magnet 26c is provided corresponding to a magnet 29d fixed to the drum 29. That is, when the driving gear 26b is inserted into the gear-receiving recess 29b, the two magnets 26c and 29d are coupled to each other. Accordingly, the drum 29 may be stably maintained in a mounted state due to the magnetic force of the magnets 26c and 29d.

The inner circumferential surface of the gear-receiving recess 29b meshes with the teeth of the driving gear 26b.

The output of the drum-rotating motor 26a is controlled by the controller 17. As the rotational speed of the drum 29 increases, centrifugal force increases, whereby the speed at which the tablets are supplied in the direction of the arrow a increases.

The drum 29 is a substantially disk-shaped member coupled to the driving gear 26b, and includes a feeding protrusion 29a formed on the upper surface thereof. The feeding protrusion 29a is a linear protrusion extending in the diameter direction of the drum 29, and serves to push the tablets in the radial direction when the drum 29 rotates. The upper surface of the drum 29 has a shape inclined downward in the radial direction from the center thereof.

The support band 27 is a substantially ring-shaped member fixed to the circumference of the drum-rotating motor 26a. A portion of the support band 27 extends in the horizontal direction, and an upper magnet 27a is provided in an end portion of the extension portion of the support band 27. The upper magnet 27a is of the same type as the lower magnet 24e (refer to FIG. 9) described above, and outputs magnetic force in the horizontal direction.

Reference numeral 24f is a cylindrical shielding cover that surrounds and shields the lifting body 24, the lead screw 23a, and the guide rods 23c. The shielding cover 24f has a telescopic structure capable of expanding or contracting according to upward/downward movement of the lifting body 24. The shielding cover 24f prevents the tablets from contacting the lifting body 24 or the lead screw 23a.

The side separation pillar 22b is a vertically extending member, the lower end portion of which is fixed to the support case 21. The upper limit sensor 28a is provided on the upper end of the side separation pillar 22b. The upper limit sensor 28a is a magnetic sensor that outputs a signal in response to the magnetic force output from the upper magnet 27a. The upper limit sensor 28a is located at a height identical to a height at which the upper magnet 27a is located when the lifting body 24 reaches top dead center.

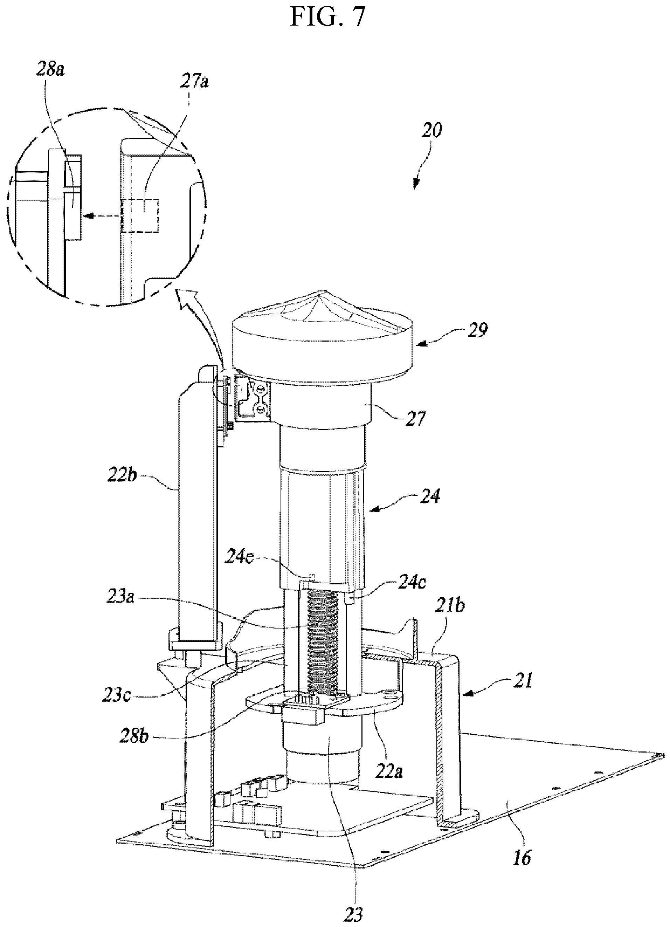

When the lifting body 24 reaches top dead center, the upper limit sensor 28a senses the upper magnet 27a, and outputs a signal indicating that the lifting body 24 has reached top dead center. In other words, the upper limit sensor 28a defines top dead center of the lifting body 24. That is, top dead center of the lifting body 24 is defined by the height at which the upper limit sensor 28a is located. FIG. 7 is a view showing a state in which the drum 29 is located at top dead center.

The signal output from the upper limit sensor 28a is transmitted to the height adjustment motor 23, and ascending of the lifting body 24 is stopped.

A part of the wall of the cylinder 25 is interposed between the upper limit sensor 28a and the upper magnet 27a. The magnetic force of the upper magnet 27a passes through the wall of the cylinder 25 and is transmitted to the upper limit sensor 28a.

The drum 29 performs upward/downward movement and rotation within a stroke range defined by the upper limit sensor 28a and the lower limit sensor 28b, thereby receiving tablets and elevating the received tablets to convey the same to the feeding module 40.

The cylinder 25 is a cylindrical member having a predetermined diameter, and accommodates the drum 29 so that the drum 29 is movable upward and downward. That is, the drum 29 performs rotation and upward/downward movement in a state of being accommodated in the cylinder 25. Further, the outer circumferential surface of the drum 29 and the inner circumferential surface of the cylinder 25 are as close to each other as possible in order to prevent the tablets from escaping therebetween.

In addition, a discharge hole 25a is formed in one side of the upper end portion of the cylinder 25. The discharge hole 25a is a passage through which the tablets elevated by the drum 29 escape in the direction of the arrow a. In addition, a sensor exposure slot 25c is formed beside the discharge hole 25a.

The sensor exposure slot 25c is a passage through which a tablet detection sensor 55 to be described later passes. The tablet detection sensor 55 is a sensor configured to detect a tablet located at a top position among the tablets elevated by the drum 29. The tablet detection sensor 55 is exposed to the interior of the cylinder 25 through the sensor exposure slot 25c. As will be described later, the ascending speed of the drum 29 is reduced immediately when the tablet detection sensor 55 detects the tablet located at the top position.

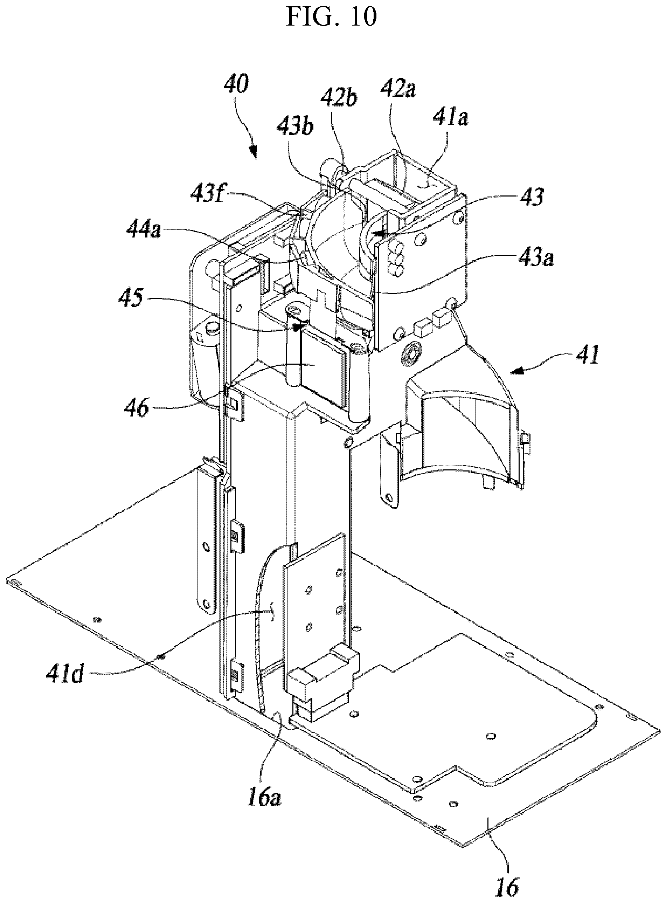

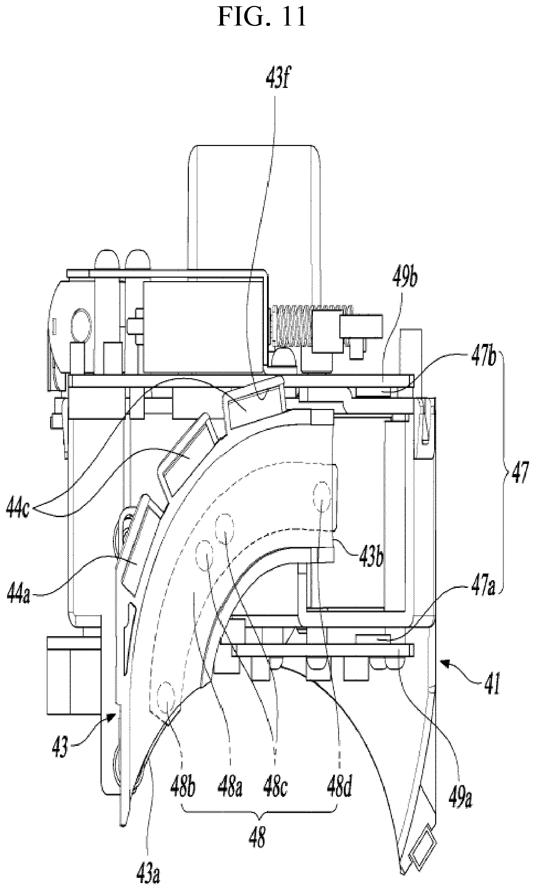

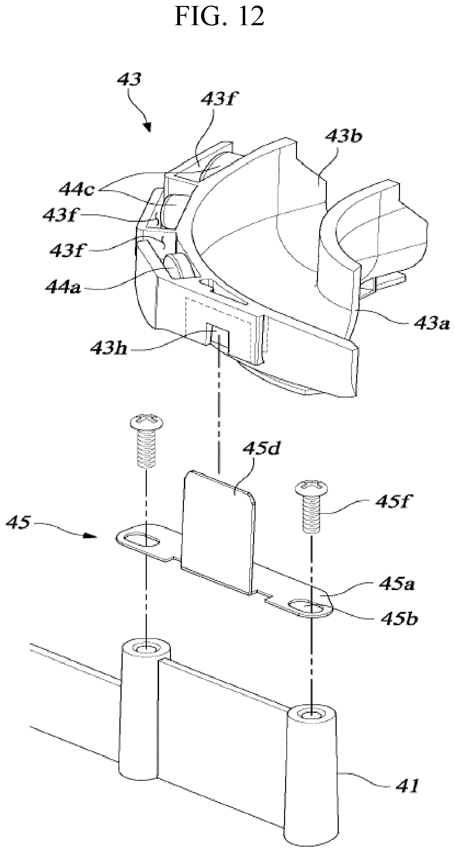

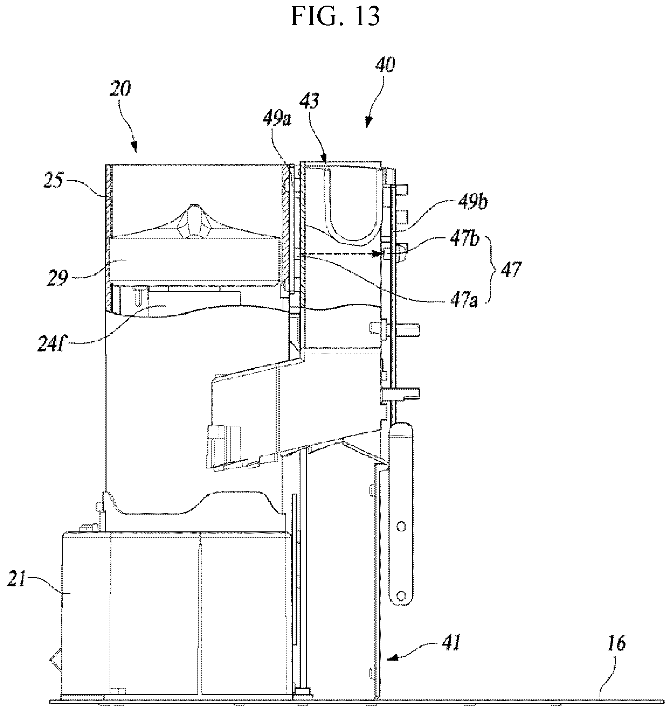

FIGs. 10 to 16 are views for explaining the configuration and operation of the feeding module 40 in the automatic tablet feeding apparatus 10 according to an embodiment of the present invention.

The feeding module 40 sequentially passes the tablets delivered from the elevation module 20 to send the tablets down to the dispensing passage 41d or to guide tablets remaining after use or incorrectly introduced tablets (two or more tablets simultaneously introduced into a receiving space 41a) to the collection passage 41e.

The feeding module 40 includes a guide duct 41, a slider 43, a slider sensor unit 48, a vibration generator, a vibrator controller, an elastic support unit, and a falling tablet detection unit 47.

As shown in FIG. 3, the guide duct 41 is a hollow member interposed between the cup-receiving holder 13 and the support case 21, and serves to pass the tablets that have passed through the slider 43 to send the tablets down to the dispensing passage 41d or the collection passage 41e.

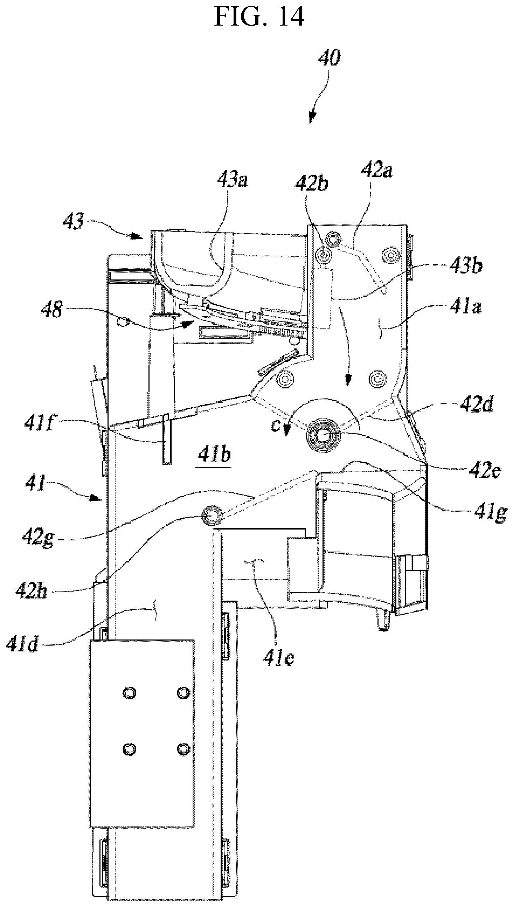

As shown in FIG. 14, a receiving space 41a and a passage determination space 41b are defined in the guide duct 41. The receiving space 41a is a space that receives tablets falling down from the slider 43. The passage determination space 41b is a space in which a determination as to whether to send the tablets to the dispensing passage 41d or to the collection passage 41e is made.

A supply shutter 42a is provided in the receiving space 41a. The supply shutter 42a is a door that opens and closes an outlet portion 43b of the slider 43. When the supply shutter 42a is opened, the tablets are supplied to the receiving space 41a.

A rotating shaft 42b of the supply shutter 42a extends horizontally, and an end portion of the rotating shaft 42b is coupled to a worm wheel 51c (refer to FIG. 2). The worm wheel 51c is a fan-shaped gear, and meshes with a worm 51b outside the guide duct 41. The worm 51b is a component that is axially rotated in both directions by a first motor 51a. Accordingly, the rotating shaft 42b is axially rotated in the leftward-rightward direction by operation of the first motor 51a, whereby the supply shutter 42a is opened and closed.

In addition, a V-shutter 42d is mounted between the receiving space 41a and the passage determination space 41b. The V-shutter 42d is a shutter having a V shape spreading out upward, and is configured to be rotated in the direction of the arrow c or in the opposite direction about a rotating shaft 42e thereof. The V-shutter 42d serves to receive the tablets supplied to the receiving space 41a and to send the tablets to the dispensing passage 41d.

The rotating shaft 42e of the V-shutter 42d extends horizontally and, as shown in FIG. 2, an end portion of the rotating shaft 42e is coupled to a worm wheel 52c. The worm wheel 52c meshes with a worm 52b outside the guide duct 41. The worm 52b is rotated in both directions by a second motor 52a. Accordingly, the V-shutter 42d is rotated by the second motor 52a.

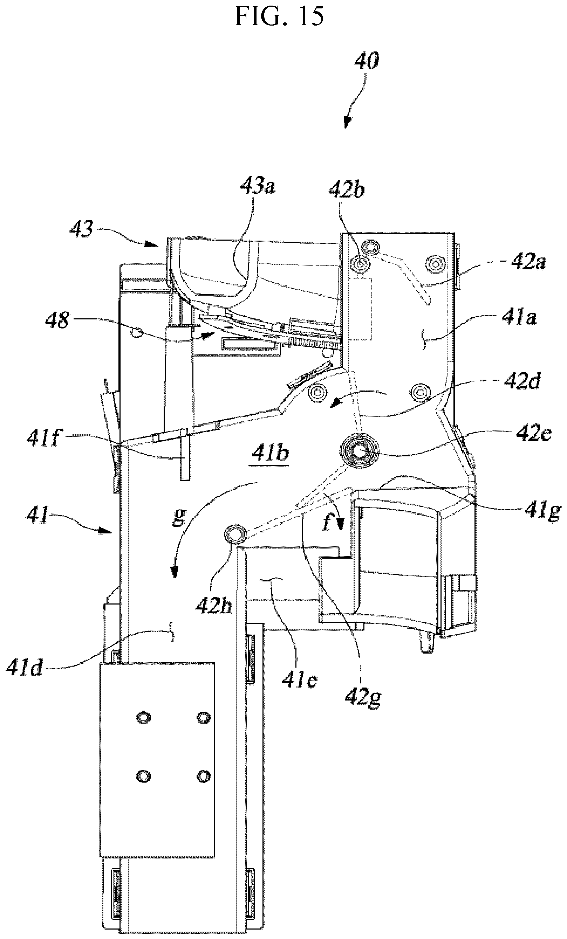

In addition, a switching shutter 42g is mounted in the passage determination space 41b. The switching shutter 42g opens the dispensing passage 41d as shown in FIG. 14, or opens the collection passage 41e as shown in FIG. 15. When opening the dispensing passage 41d, the switching shutter 42g blocks the collection passage 41e. When opening the collection passage 41e, the switching shutter 42g blocks the dispensing passage 41d.

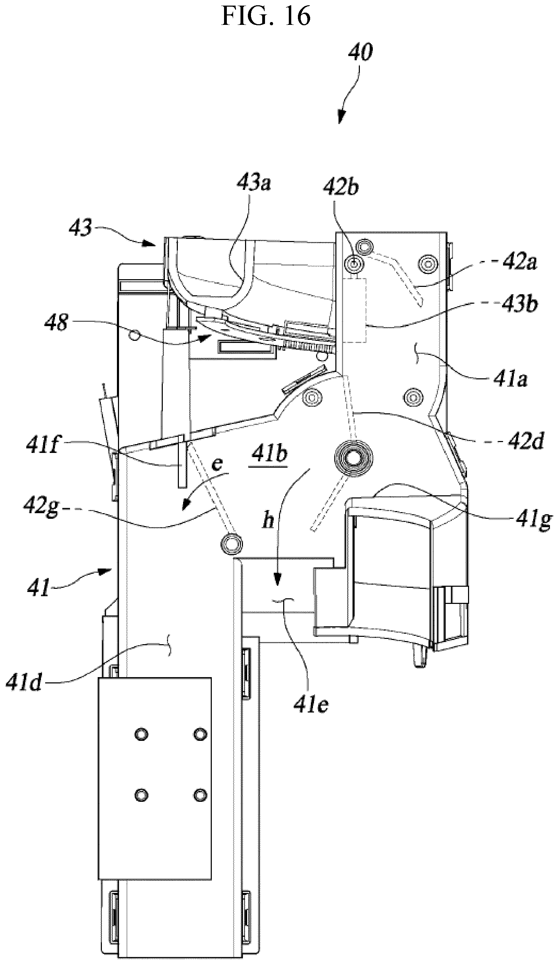

In order to limit the rotational angle of the switching shutter 42g, a latching protrusion 41f and a support protrusion 41g are provided in the passage determination passage 41b. When the switching shutter 42g is rotated in the direction of the arrow e in FIG. 16, an end portion thereof is caught by the latching protrusion 41f. When the switching shutter 42g is rotated in the direction of the arrow f in FIG. 15, the end portion thereof is caught by the support protrusion 41g.

A rotating shaft 42h of the switching shutter 42g extends horizontally, and, as shown in FIG. 2, an end portion of the rotating shaft 42h is coupled to a worm wheel 53c outside the guide duct 41. The worm wheel 53c is a fan-shaped gear, and meshes with a worm 53b. The worm 53b is axially rotated in both directions by a third motor 53a. Accordingly, the switching shutter 42g is rotated by the third motor 53a. The first, second, and third motors 51a, 52a, and 53a constitute a shutter driver 50 (refer to FIG. 19), and are independently controlled by the controller 17.

The dispensing passage 41d is a passage that receives the tablets moving in the direction of the arrow g in FIG. 15 and guides the tablets in the downward direction. The tablets that have passed through the dispensing passage 41d pass through the pass hole 16a in the bottom plate 16 and are delivered to a user.

The collection passage 41e is a passage extending to the collection cup 14. The tablets moving in the direction of the arrow h in FIG. 16 are introduced into the collection passage 41e, and are delivered to the collection cup 14.

The slider 43 is a component that receives tablets introduced thereinto in the direction of the arrow a in FIG. 4 and guides the tablets to the receiving space 41a. When viewed from above, the slider 43 has a bent shape. In detail, a tablet introduction direction through the inlet portion 43a of the slider 43 and a tablet discharge direction through the outlet portion 43b of the slider 43 form a substantially right angle therebetween, rather than coinciding with each other. Further, the slider 43 has a U-shaped cross-section that is open upward, and is inclined downward toward the receiving space 41a. The slider 43 may be made of transparent synthetic resin or acrylic.

Three side pockets 43f are provided on the outer side portion of the slider 43. Each of the side pockets 43f has a space defined therein so as to be open upward. A first vibrator 44a is mounted in one of the side pockets 43f, and second vibrators 44c are mounted in the two remaining side pockets 43f.

The first and second vibrators 44a and 44c constitute a vibration generator 44 (refer to FIG. 19). Each of the first and second vibrators 44a and 44c operates in response to an electrical signal applied thereto from the outside to output vibration energy. The vibration energy generated during operation of the first and second vibrators 44a and 44c is transferred to the slider 43. The slider 43 is vibrated by the first and second vibrators 44a and 44c, and the tablets loaded on the slider 43 are guided to the receiving space 41a due to vibration of the slider 43.

The first vibrator 44a is a DC vibrator, the frequency of which is adjustable, and operates in cases other than collection of the tablets. When the first vibrator 44a operates, the second vibrators 44c do not operate. The output frequency of the first vibrator 44a is variable, and decreases when the first tablet among the tablets passing through the slider 43 is detected by an exit sensor 48d to be described later. The tablets introduced into the slider 43 through the inlet portion 43a are conveyed at a constant speed. The tablet conveyance speed is reduced when the tablets reach the outlet portion 43b. As will be described later, when the tablets are detected by the exit sensor 48d, the supply shutter 42a is opened.

In addition, the first vibrator 44a is connected to a vibrator controller 46. The vibrator controller 46 is a pulse width modulation (PWM) controller that modulates a pulse width and prevents the tablets from bouncing on the bottom surface of the slider 43 during conveyance. The vibrator controller 46 causes the tablets to slide down slowly toward the receiving space 41a in a state of being in frictional contact with the bottom surface of the slider 43.

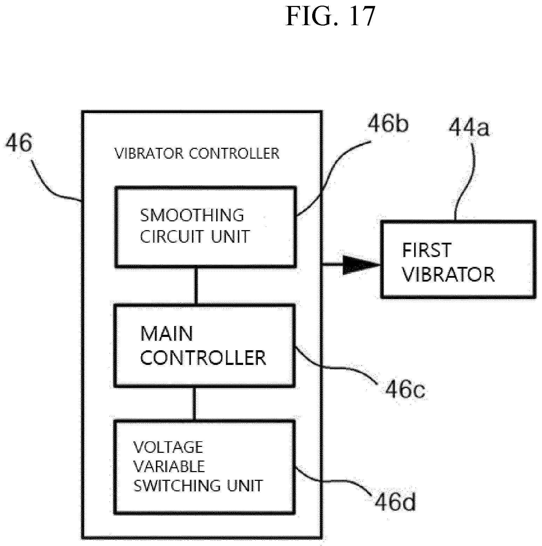

As shown in FIG. 17, the vibrator controller 46 configured to control the first vibrator 44a includes a smoothing circuit unit 46b, a main controller 46c, and a voltage variable switching unit 46d.

In detail, the smoothing circuit unit 46b serves to smooth a DC voltage in order to operate the automatic tablet feeding apparatus 10 according to the present invention or the first vibrator 44a. The main controller 46c serves to generate a PWM control signal. The voltage variable switching unit 46d serves to vary the DC voltage smoothed by the smoothing circuit unit 46b in response to the PWM control signal from the main controller and to apply the DC voltage to the first vibrator 44a.

Since the vibrator controller 46 configured as described above supplies the smoothed DC voltage to the first vibrator 44a, the first vibrator 44a gently generates vibration, whereby the tablets are stably supplied.

Further, the magnitude and period of vibration of the first vibrator 44a may be adjusted (or controlled) by the PWM control signal from the main controller 46c and voltage variation by the voltage variable switching unit 46d.

In this way, the magnitude and period of vibration of the first vibrator 44a are controlled to desired values. Therefore, the magnitude and period of vibration of the first vibrator 44a may be adjusted (or controlled) according to the type of tablet (e.g. the size or weight of the tablet).

That is, the PWM control signal generated by the main controller 46c is transmitted to the voltage variable switching unit 46d, whereby the first vibrator 44a is vibrated in response to a signal corresponding to an input voltage and an input frequency.

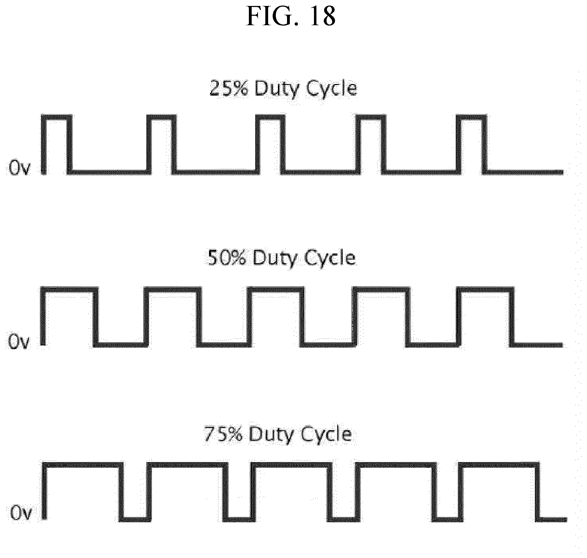

FIG. 18 is a waveform diagram showing an example of the PWM control signal. The duty ratio of the pulse wave is adjusted to change the pulse width, thereby varying an average voltage.

In this way, it is possible to control the magnitude and period of vibration of the first vibrator 44a to optimal levels. Therefore, it is possible to vary the magnitude and period of vibration according to the shape, size, or weight of the tablet, thereby stably supplying the tablets and optimally consuming power required for operation of the first vibrator 44a. As a result, it is possible to maximize the operation time of the first vibrator 44a with a given amount of power.

Each of the second vibrators 44c is a BLDC vibrator, the output frequency of which is not adjusted. The second vibrators 44c are used to collect the tablets. The collection passage 41e is opened immediately when the second vibrators 44c operate.

In addition, the slider sensor unit 48 is mounted on the lower surface of the slider 43. The slider sensor unit 48 includes a lower board 48a fixed to the lower surface of the slider 43, an entrance sensor 48b, an exit sensor 48d, and an intermediate sensor 48c. A circuit for driving the sensors is provided on the lower board 48a. The entrance sensor 48b, the intermediate sensor 48c, and the exit sensor 48d are proximity sensors.

The entrance sensor 48b detects tablets introduced into the slider 43 through the inlet portion 43a. When the entrance sensor 48b detects the tablets, the first vibrator 44a operates immediately, and rotation of the drum 29 stops. Alternatively, the first vibrator 44a may operate immediately when the tablet detection sensor 55 detects the tablets.

The tablets conveyed from the inlet portion 43a by operation of the first vibrator 44a pass over the intermediate sensor 48c. The intermediate sensor 48c checks the conveyance speed of the tablets. When the tablets that have passed over the intermediate sensor 48c reach a region above the exit sensor 48d, the output frequency of the first vibrator 44a is reduced, and the overall conveyance speed of the tablets is reduced. At this time, the supply shutter 42a is opened to pass one tablet. The supply shutter 42a blocks the outlet portion 43b immediately after the tablet has passed through the outlet portion 43b, thereby preventing successive feeding of the tablets.

The tablet falling into the receiving space 41a is seated onto the V-shutter 42d. Thereafter, as the V-shutter 42d rotates in the direction of the arrow c, the tablet moves into the passage determination space 41b, and then moves in the direction of the arrow g along the switching shutter 42g.

However, if two tablets are introduced into the receiving space 41a due to abnormal operation, the switching shutter 42g rotates in the direction of the arrow e in FIG. 16. The two tablets seated on the V-shutter 42d are collected in the collection cup 14 through the opened collection passage 41e.

The falling tablet detection unit 47 detects whether the number of tablets introduced into the receiving space 41a through the outlet portion 43b is one or two or more. The falling tablet detection unit 47 includes a light-emitting sensor 47a and a light-receiving sensor 47b.

The light-emitting sensor 47a and the light-receiving sensor 47b are mounted on a first vertical board 49a and a second vertical board 49b, respectively. The light-emitting sensor 47a and the light-receiving sensor 47b are disposed so as to face each other with the receiving space 41a interposed therebetween. The first vertical board 49a and the second vertical board 49b are fixed to the outer side of the guide duct 41. The tablet detection sensor 55 described above is mounted on the first vertical board 49a.

The light-emitting sensor 47a and the light-receiving sensor 47b detect the number of tablets passing through the receiving space 41a, and transmit information about the detected number of tablets to the controller 17, thereby causing the controller 17 to open one of the dispensing passage 41d and the collection passage 41e based on the detected number of tablets.

In addition, an insertion recess 43h is formed in the outer side surface of the slider 43. The insertion recess 43h is formed to be open downward to separably receive an extension portion 45d of an elastic support plate 45. The elastic support plate 45 is mounted on the guide duct 41 in order to support the slider 43.

The elastic support plate 45 is manufactured by pressing a metal plate having a certain thickness, for example, sheet spring steel or stainless steel. The elastic support plate 45 includes a base portion 45a and an extension portion 45d. The base portion 45a has long holes 45b formed in both end portions thereof. The long holes 45b are through-holes through which fixing screws 45f pass. The elastic support plate 45 is fixed to the upper portion of the guide duct 41 by means of the fixing screws 45f.

The extension portion 45d is bent at a right angle and extends upward from the base portion 45a, and is inserted into the insertion recess 43h. The extension portion 45d is elastically deformable. Therefore, when the slider 43 is vibrated, the extension portion 45d is also vibrated. That is, the elastic support plate 45 does not disturb vibration of the slider 43 while supporting the slider 43. The elastic support plate 45 may have any of various other shapes, so long as the same is capable of playing the above-described role.

In particular, the extension portion 45d and the base portion 45a of the elastic support plate 45 are formed to be perpendicular to each other through one bending process.

Therefore, the elastic support plate 45 is simple to manufacture, and enables the slider 43 to be efficiently vibrated by the vibrators.

In addition, the fixing screws 45f are loosely fitted through the long holes 45b in the both end portions of the base portion 45a. Therefore, it is possible to adjust the position of the elastic support plate 45 when inserting the extension portion 45d into the insertion recess 43h. As a result, it is possible to easily insert the extension portion 45d into the insertion recess 43h.

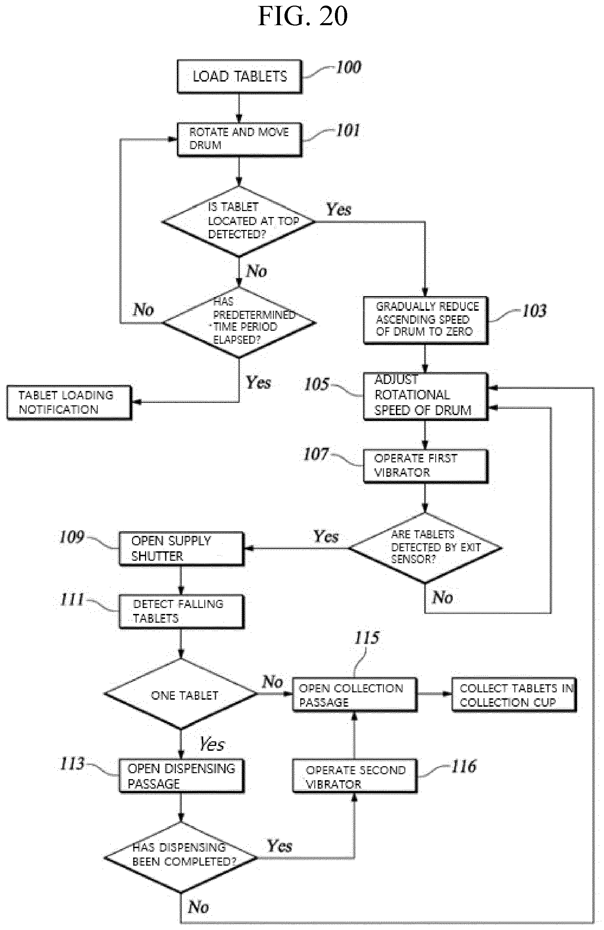

FIG. 19 is a block diagram showing the overall configuration of the automatic tablet feeding apparatus 10 according to an embodiment of the present invention, and FIG. 20 is a flowchart showing operation of the automatic tablet feeding apparatus 10.

As shown in FIGs. 19 and 20, the automatic tablet feeding apparatus 10 according to the embodiment operates as follows.

First, tablets to be dispensed are poured into the cylinder 25 in the state in which the cylinder 25 is empty and the drum 29 is located at bottom dead center (a tablet loading step 100). After the tablets are loaded in the cylinder 25, a dispensing command is input through the interface unit 12. When the dispensing command is input, the controller 17 operates the height adjustment motor 23 and the drum-rotating motor 26a. As the height adjustment motor 23 and the drum-rotating motor 26a operate, the drum 29 gradually ascends while rotating (a step 101 of rotating and moving the drum upward).

At the same time, the tablet detection sensor 55 operates in order to detect the tablets that ascend. The tablet detection sensor 55 is an optical sensor that radiates light in a horizontal direction and detects an object using reflected light.

If no tablets are detected during a predetermined time period after start of the step 101 of rotating and moving the drum upward, a notification indicating the need for loading of tablets is displayed on the display unit 12a (a tablet loading notification step 118). That is, a user is notified of the fact that the cylinder 25 is currently empty. When the tablet loading step 100 is performed properly, the tablet loading notification step 118 is not performed.

When the tablet detection sensor 55 detects the tablets, the ascending speed of the drum 29 is gradually reduced to zero. The drum 29 starts to decelerate when the tablet detection sensor 55 detects the tablets, and stops when the upper edge of the outer circumferential surface of the drum 29 reaches the bottom of the discharge hole 25a, i.e. top dead center (a step 103 of reducing the ascending speed of the drum to zero).

Stopping of ascending of the drum 29 at top dead center is implemented by the upper limit sensor 28a. That is, the upper limit sensor 28a transmits a signal to the controller 17, and the controller 17 stops operation of the height adjustment motor 23 in response to the signal from the upper limit sensor 28a. Even after ascending of the drum 29 is stopped, the drum 29 continues to rotate.

The tablets are conveyed to the slider 43 by centrifugal force generated by the drum 29 immediately after the drum 29 reaches top dead center. At this time, the first vibrator 44a operates to convey the tablets to the receiving space 41a.

While the tablets pass through the slider 43, the rotational speed of the drum 29 is reduced (a step 105 of adjusting the rotational speed of the drum). That is, when the tablets are detected by all of the exit sensor 48d, the intermediate sensor 48c, and the entrance sensor 48b, rotation of the drum 29 is temporarily stopped. When no tablets are detected by the entrance sensor 48b, the temporarily stopped drum 29 rotates again so that the tablets are conveyed in the direction of the arrow a. Through this operation, the tablets may be continuously loaded on the slider 43.

As described above, when the first tablet among the tablets that are being conveyed is detected by the exit sensor 48d, the supply shutter 42a is opened so that the first tablet is introduced into the receiving space 41a (a supply shutter opening step 109). However, when no tablets are detected by the exit sensor 48d, the controller 17 adjusts the rotational speed of the drum 29 to promote introduction of the tablets.

The tablet introduced into the receiving space 41a is detected by the falling tablet detection unit 47. That is, a determination as to whether the number of tablets falling down is one or two or more is made (a falling tablet detection step 111). When it is determined that one tablet is falling down, the dispensing passage 41d is opened, and the corresponding tablet is delivered to a pharmacist (a dispensing passage opening step 113).

However, when it is determined that two or more tablets are falling down, the collection passage 41e is opened, and the corresponding tablets are collected in the collection cup 14 through the collection passage 41e (a collection passage opening step 115).

When dispensing of a target number of tablets is not completed, the step 105 of adjusting the rotational speed of the drum is performed so that the tablets are continuously conveyed, and the above processes are repeated.

When dispensing of a target number of tablets is completed, operation of the first vibrator 44a is stopped, and the second vibrators 44c are operated. At the same time, the collection passage 41e is opened. The tablets loaded on the slider 43 by the drum 29 pass through the slider 43 without a change in the conveyance speed thereof due to operation of the second vibrators 44c, and are collected in the collection cup 14 via the guide duct 41.

As is apparent from the above description, the automatic tablet feeding apparatus according to the present invention configured as described above may control the magnitude and period of vibration of the vibrator.

Accordingly, it is possible to stably supply tablets and to prevent the tablets from bouncing on the slider during conveyance of the tablets, thereby preventing the tablets from being broken into powder or preventing tablet powder from being dispersed. In addition, the automatic tablet feeding apparatus according to the present invention may operate very quietly.

In addition, the elastic support plate is simplified in structure and thus is easy to manufacture. Accordingly, it is possible to reduce a manufacturing cost and to enable the slider to be efficiently vibrated by the vibrators.

Although specific embodiments of the present invention have been disclosed for illustrative purposes, those skilled in the art will appreciate that various modifications, additions, and substitutions are possible, without departing from the scope and spirit of the invention as disclosed in the accompanying claims.

## Claims

1. An automatic tablet feeding apparatus comprising:
a guide duct having a receiving space defined therein to receive tablets introduced thereinto and to guide the tablets downward;
a slider formed to be inclined downward toward the receiving space and to provide a tablet conveyance passage;
a first vibrator accommodated in one of a plurality of side pockets provided on an outer side portion of the slider, the first vibrator being configured to output vibration energy in response to an external control signal and to be adjustable in output frequency;
a vibrator controller configured to control the output frequency of the first vibrator; and
an elastic support plate received in an outer side surface of the slider,
wherein the vibrator controller comprises:
a smoothing circuit unit configured to smooth a DC voltage;
a main controller configured to generate a PWM control signal; and
a voltage variable switching unit configured to vary the DC voltage smoothed by the smoothing circuit unit in response to the PWM control signal from the main controller and to apply the DC voltage to the first vibrator.

2. The automatic tablet feeding apparatus according to claim 1, further comprising a second vibrator accommodated in a remaining one of the plurality of side pockets, the second vibrator being configured to be fixed in output frequency.

3. The automatic tablet feeding apparatus according to claim 1, wherein, when the tablets are detected by an exit sensor, the output frequency of the first vibrator is reduced in order to reduce a conveyance speed of the tablets.

4. The automatic tablet feeding apparatus according to claim 1, wherein the elastic support plate comprises:
a base portion fixed to an upper portion of the guide duct; and
an extension portion bent and extending upward from the base portion and coupled to the slider so as to be vibrated simultaneously with the slider, and
wherein the extension portion and the base portion are formed to be perpendicular to each other through one bending process.

5. The automatic tablet feeding apparatus according to claim 4, wherein the base portion comprises long holes formed in both end portions thereof to allow fixing screws to pass therethrough, and
wherein the elastic support plate is fixed to the upper portion of the guide duct using the fixing screws.

6. The automatic tablet feeding apparatus according to claim 1, wherein the elastic support plate is made of sheet spring steel or stainless steel so as to have a predetermined thickness.

7. The automatic tablet feeding apparatus according to claim 1, wherein the elastic support plate is removably received in an insertion recess formed in the outer side surface of the slider.
